# EUROPEAN PATENT APPLICATION

(11) **EP 4 799 992 A1**
(43) Date of publication of application: **02.09.2026**
(21) Application number: 26160057.1
(22) Date of filing: 23.02.2026
(51) Int. Cl.: C04B 28/02, C04B 40/00, C04B 111/40

(54) **LIGHTWEIGHT AGGREGATE CONCRETE**

(30) Priority: 21.02.2025 FI 20254013 U
(71) Applicant: Reinikainen, Petri, 05840 Hyvinkää (FI)
(72) Inventor: Reinikainen, Petri, 05840 Hyvinkää (FI)
(74) Representative: Salomäki, Juha Kari Ensio

(57) **Abstract**

The object of the invention is lightweight aggregate concrete comprising both concrete and lightweight expanded clay aggregate. The mixture of concrete and lightweight expanded clay aggregate includes added lime.

## Description

The object of the invention is concrete as defined in claim 1, the concrete including lightweight expanded clay aggregate as one component.

The aim of the invention is to provide a concrete comprising lightweight expanded clay aggregate, the concrete being pumpable with prior-art concrete pumping equipment. Lightweight expanded clay aggregate is mixed into the concrete and it remains mixed with it, in which case the concrete also stays of uniform quality. Concrete pumping equipment known in the art is not able to pump the lightweight aggregate concrete known in the art.

Attempts have been made earlier to mix lightweight expanded clay aggregate into concrete because it is light in weight and would therefore lighten the weight of the concrete. However, lightweight expanded clay aggregate tends to rise to the surface of the concrete mixture, in which case the mixture of lightweight expanded clay aggregate and concrete obtained is not homogeneous. This phenomenon is even more pronounced when using pumping equipment, in which case concrete mixed with lightweight expanded clay aggregate may not be handled with pumping equipment. If the lightweight expanded clay aggregate is not uniformly mixed into the concrete, the concrete will be of poor quality and it may fracture or crack at a lower stress than that calculated. The separation of lightweight expanded clay aggregate from concrete into its own fraction on the surface of the concrete can be reduced by mixing the lightweight expanded clay aggregate in the conventional way in a concrete mixer one batch at a time, but when using pumping equipment on a larger scale, the lightweight expanded clay aggregate separates into its own fraction on the surface of the concrete to be pumped, and thus the concrete is not of uniform quality.

Concrete comprises aggregate, cement and water, as well as possible admixtures and additives. The aggregate is granular stone, the particle size and particle distribution of which can be adjusted to affect the properties of the finished structural element. Cement, on the other hand, brings about a chemical reaction with water that is required for hardening.

The cement manufacturing process starts with the quarrying of limestone. After this the limestone is ground in a ball mill to the desired coarseness. After grinding, clay is mixed into the powder and the mixture is homogenized to even out the composition. The finished mixture is transported through preheating to a long clinker kiln, in which the mixture is sintered into the finished clinker. Cement minerals form in this sintering process. The clinker is ground into cement in a ball mill. During grinding, gypsum is added to the clinker for adjusting the setting time, as well as various additives for achieving the desired properties. Additives include granulated blast furnace slag and limestone. The rate of strength gain of the cement is mainly adjusted with the fineness of grinding. Experiments with numerous different additives have been tried in order to improve the properties of cement. For example, the addition of starch slows down the rate of strength gain of the cement and improves the properties of the concrete being made from it.

The aggregate used for concrete comprises aggregates of different sizes in terms of grading. The proportion by volume of aggregate in concrete is approx. 65-80%. The properties of aggregates have a major impact on the properties of concrete. In principle, any rock material whatsoever that is sufficiently strong and dense and that does not participate in the reactions of the cement or impair the durability of concrete can be used as aggregate. The most commonly used aggregate for concrete is natural rock materials, which can be either modified by nature or mechanically crushed. In Finland, mechanically-crushed, granite-based, natural rock material is generally used. So-called artificial aggregates can also be used as aggregate, e.g. the aforementioned lightweight expanded clay aggregate or crushed brick. The aggregate used as aggregate for concrete must be suitable for its purpose, i.e. it may not contain harmful amounts of substances that have a detrimental effect on the properties of the concrete or on the properties of the reinforcements in the concrete. In other words, the aggregate may not therefore contain e.g. humus, debris, oil or waste. On the other hand 'debris' is a relative concept, and e.g. plastic fibers, glass fibers and metal fibers can be added to concrete to improve tensile strength. Ice may also be used with the purpose of forming pores in the hardened concrete and thus improving its frost resistance. The grading of aggregates refers to the weight ratios of the different amounts of particles contained in the aggregate. Grading describes the sizes and distribution of the particles in the aggregate. Grading is generally determined by screening. The goal of grading design is to select the particle distribution in such a way that the particles are well packed between each other, thus creating a dense structure that holds together well. To achieve good strength, it is recommended to use at least two types of aggregates: fine (e.g. 0-8 mm) and coarse (e.g. 8-16 mm). Stone particles of several sizes settle between each other, so the adhesive surface area of the aggregate increases.

Lightweight expanded clay aggregate is an expanded granular construction material, round in shape and with a particle size of between 4-16 mm, that is formed by firing clay. Lightweight expanded clay aggregate is manufactured by expanding clay in a rotating kiln and baking the particles into their shape. The advantages of the material are its insulation properties, light weight, and resistance to both moisture and mechanical stress. Lightweight expanded clay aggregate floats on the surface of water, so mixing it into concrete is problematic. The dry bulk density of lightweight expanded clay aggregate when uncompacted is approx. 225 kg/m³. A commercial product is known in the art by the name of Leca^{®}-sora.

Lightweight aggregate concrete can be handled by using large buckets and it can also be moved on a belt conveyor (e.g. to the second floor), but not by pumping. Applications for lightweight aggregate concrete include: slope and insulation elements for roofs, lightweight backfillings and elevations, base courses and frost insulation for streets and gardens. The advantage of lightweight aggregate concrete is, as its name implies, its light weight. That being the case, it is very well suited for pour castings on the roofs of buildings. In such a case, it would be advantageous to be able to use the existing pumping equipment for handling lightweight aggregate concrete.

The problem solved by the invention is how to maintain a homogeneous distribution of the lightweight expanded clay aggregate in concrete containing lightweight expanded clay aggregate, in particular when using pumping equipment.

The problem can be solved by mixing lime into the concrete. Adding lime to the concrete brings about binding of the expanded clay aggregate to the concrete in such a way that the lightweight expanded clay aggregate remains evenly mixed. This enables the use of the existing pumping equipment in casting work. Cement has a small amount of lime as a component, but only the small amount required for cement production is blended in. In fresh concrete according to prior art there is no lime at all added, and the concrete has no benefit from any added lime.

According to the invention, lime is added to concrete e.g. in the form of lime paste. Lime paste is manufactured e.g. from ordinary quicklime CaO (QL) or from slaked lime Ca(OH)₂ (SL). The amount of lime paste mixed into the concrete is 50-150 kg/m³, preferably 60-130 kg/m³ and very advantageously 70-90 kg/m³. The added lime keeps a lightweight expanded clay aggregate particle mixed in with the concrete, and the lightweight expanded clay aggregate does not form concentrations on the surface of the concrete or inside the concrete. Adding lime to the concrete produces lightweight aggregate concrete that is structurally homogeneous, and the concrete can be kept homogeneous even though it is handled with pumping equipment. Earlier solutions of concrete containing lightweight expanded clay aggregate have not been suitable for pumping equipment because the lightweight expanded clay aggregate tries to separate into its own fraction in concrete. Additionally, separate devices have had to be brought in for mixing concrete containing lightweight expanded clay aggregate and for moving it to the casting site, which has slowed down the pouring speed.

The solution according to the invention enables the use of lightweight aggregate concrete with existing pumping equipment, which means that structurally lighter concrete can be used on a larger scale. In addition, the pouring speed can be accelerated, which improves cost-effectiveness, due to its lightness and speed. The lightweight aggregate concrete according to the invention can be produced cost-effectively with existing machines, which saves extra transport to the worksite. Pumpable lightweight aggregate concrete is therefore also an environmentally friendly product.

The lightweight aggregate concrete according to the invention is characterized by what is defined in the characterization part of the independent claim 1. Other preferred embodiments according to the invention are presented in the subordinate claims.

It is obvious to the person skilled in the art that the invention is not limited solely to the examples described above, but that it may be varied within the scope of the claims presented below.

## Claims

1. Lightweight aggregate concrete comprising both concrete and lightweight expanded clay aggregate, **characterized in that** the mixture of concrete and lightweight expanded clay aggregate includes added lime.

2. Lightweight aggregate concrete according to claim 1, **characterized in that** the added lime is lime paste that is manufactured from ordinary quicklime CaO (QL).

3. Lightweight aggregate concrete according to claim 1, **characterized in that** the added lime is lime paste that is manufactured from slaked lime Ca(OH)₂ (SL).

4. Lightweight aggregate concrete according to any of the preceding claims 1-3, **characterized in that** the added lime in the lightweight aggregate concrete is 50-150 kg/m³, preferably 60-130 kg/m³ and very advantageously 70-90 kg/m³.
